# EUROPEAN PATENT APPLICATION

(11) **EP 4 721 560 A1**
(43) Date of publication of application: **08.04.2026**
(21) Application number: 24204951.8
(22) Date of filing: 07.10.2024
(51) Int. Cl.: A01M 1/10, A01M 23/00, A01M 1/02, A01M 31/00

(54) **A METHOD FOR ESTIMATING REMAINING BATTERY LIFE TIME OF A PEST CONTROL DEVICE**

(71) Applicant: Anticimex Innovation Center A/S, 3200 Helsinge (DK)
(72) Inventor: ANDERSSON, Emil, Malmö (SE); ABDELKAWY AMER, Amer, Farum (DK)
(74) Representative: Zacco Denmark A/S

(57) **Abstract**

A computer-implemented method (400) for estimating remaining battery life time of a pest control device (106a-c) is disclosed. A memory (114) of the pest control device comprises battery data (200) comprising one or more of the following: battery orientation data (300) representing information about orientation of the battery (108), temperature data (304) representing a current temperature and/or historical temperature of the battery, voltage data (302) representing a current and/or historical voltage over the battery, installation time data (306) representing time of installation of the battery and manufacturing data (314), and non-battery data (202) comprising one or more of the following environment data (308) representing information about an environment in which the pest control device is placed, mode data (310) comprising current mode and/or historical modes of the pest control device, and location data (212) representing a geographical position of the pest control device. The method comprises
establishing (402) a data communication path to the communication unit (115) of the pest control device (106a-c),
obtaining (404) the battery data (200) from the memory (114) of the pest control device (106a-c) via the data communication path,
obtaining (406) the non-battery data (202) from the memory (114) of the pest control device (106a-c) via the data communication path, and
applying (408) a machine learning model (206), wherein the machine learning model receives as input the battery data (200) and as additional input the non-battery data (202) and outputs a prediction of the remaining battery life time of the pest control device (106a-c), wherein the machine learning model has been trained by means of reference battery data and reference non-battery data indicative of remaining battery life times for reference pest control devices associated with the reference battery data and the reference non-battery data.

## Description

### Technical Field

The invention generally relates to pest control. More specifically, it is related to a method for estimating remaining battery life time of a pest control device, a predictor device, a system, a computer program product, and a trained machine learning model.

### Background Art

Today it is increasingly popular to use connected pest control devices, that is, traps, monitoring devices, etc that are provided with communication units such that status data can continuously be output from the devices. After being received by a gateway and processed by a central server, information about the devices can be transmitted to an operator device, such as a mobile phone carried by the operator. By having this status data fed from the pest control device, the operator can be kept informed about the status of the pest control devices remotely. In addition to the efficiency advantages, this approach also provides for that potential unwanted side effects of pest traps can be reduced. By way of example, if a rodent has been caught and killed in a trap, it is made possible, as an effect of using a connected pest control device, for the operator to quickly take action and remove the killed rodent from the trap. By removing the killed rodent quickly, the risk for unwanted smell or the risk for an increased number of flies can be reduced.

Using connected pest control devices is also beneficial from an animal welfare perspective. Even though most pest control devices equipped with killing mechanisms are designed in a way such that the risk of having the animal wounded but not killed is low, the risk cannot be fully eradicated. Therefore, by informing the operator as soon as possible, by transmitting the status data via wireless communication or wired communication from the pest control device to the operator device, in the event that the animal is wounded and trapped but not killed, the time of suffering for the animal can be reduced. Thus, unlike many of the conventional traps used today, the risk that the animal, that is caught but not killed, starves to death can be reduced if using connected pest control devices.

There are different ways to set up a system of pest control devices. One way to provide easy installation and reliable communication is to set up the pest control devices in a mesh network. By using the mesh network approach, pest control devices can be added swiftly and by providing multiple communication paths, redundancy can be held at a high level. Put differently, by using the pest control devices both for pest control and as communication nodes, several intermediate pest control devices that can be used for routing data to and from a gateway are provided. By providing several communication paths in this way reduces the risk of not being able to transmit the status data from the pest control device to the operator device. Thus, in effect, in addition to providing the possibility to easily add or remove pest control devices to the system, using a mesh network approach also comes with the benefit that the risk that the status data cannot be provided to the operator is held at a low level.

To further improve flexibility, it is today common that the pest control devices are battery-powered, either solely battery-powered or battery-powered as a back-up. Since the mesh network approach may result in a high energy consumption during reconfiguration of the communication paths in the network, it has been suggested to use so-called sleep signals for limiting the reconfiguration of the communication paths to certain time periods, thereby reducing energy consumption and as an effect improving battery life time.

Even though suggestions have been provided for how a system of pest control devices may be operational even though one or a few of the devices have depleted batteries, by using a mesh network, and how the battery life time of pest control devices can be extended, by using sleep signals, there are still challenges with using battery-powered pest control devices. One such challenge is to forecast, or predict, the remaining battery life time. Standard procedures, like measuring voltage over the battery, may provide sufficient information in some cases, but not always. For these reasons, there is a need for improved ways to estimate remaining battery life time of pest control devices to reduce the risk that animals are caught without the operator being informed.

### Summary

It is an object of the invention to at least partly overcome one or more of the above-identified limitations of the prior art. In particular, it is an object to provide a method for estimating a remaining battery life time in a pest control device in a reliable but yet cost efficient as well as flexible manner.

According to a first aspect it is provided a computer-implemented method for estimating remaining battery life time of a pest control device, wherein the pest control device comprises a battery, a control circuitry comprising a processor, a memory, a communication unit and a sensor configured to detect a pest, wherein the pest control device is arranged to obtain sensor data using the sensor, process the sensor data into status data using the control circuitry, and provide the status data using the communication unit to a gateway, wherein the status data comprises a presence detection of the pest, a trapping indication of the pest and/or a killing indication of the pest, wherein the memory comprises battery data comprising one or more of the following: battery orientation data representing information about orientation of the battery, temperature data representing a current temperature and/or historical temperature of the battery, voltage data representing a current and/or historical voltage over the battery, installation time data representing time of installation of the battery, and manufacturing data representing manufacturing date, and/or batch identification data, and non-battery data comprising one or more of the following environment data representing information about an environment in which the pest control device is placed, mode data comprising current mode and/or historical modes of the pest control device, and/or location data representing a geographical position of the pest control device, said method may comprise
establishing a data communication path to the communication unit of the pest control device,
obtaining the battery data from the memory of the pest control device via the data communication path,
obtaining the non-battery data from the memory of the pest control device via the data communication path,
applying a machine learning model, wherein the machine learning model receives as input the battery data and as additional input the non-battery data and outputs a prediction of the remaining battery life time of the pest control device, wherein the machine learning model has been trained by means of reference battery data and reference non-battery data indicative of remaining battery life times for reference pest control devices associated with the reference battery data and the reference non-battery data.

By using both the battery data as well as the non-battery data as the input to the machine learning model for estimating the remaining battery life time, a more precise estimation can be made, which in turn reduces the risk that animals are trapped without this being reported via the status data. By way of example, such situation may arise in a snap trap in which a killing mechanism is purely mechanical, and hence not affected by a battery depletion, while the communication unit and sensor must be powered by the battery to be operational.

The method may further comprise comparing the prediction of the remaining battery life time with a replacement threshold, in case the prediction is below the replacement threshold, transmitting a battery replacement instruction to an operator device. By way of example, if the remaining battery life time is 15 hours and the replacement threshold is set to 24 hours, the battery replacement instruction should be transmitted.

The method may further comprise determining a geographical area in which the pest control device is placed, identifying another pest control device placed within the geographical area, obtaining the prediction of the remaining battery life time of the other pest control device, determining a difference in predicted remaining battery life time by using the prediction of the remaining battery life time of the other pest control device and the prediction of the remaining battery life time, in case the difference is above a threshold, adjusting operational parameters, such as sleep period time between activated periods, such that the difference is minimized, and transmitting the operational parameters adjusted to the memory of the pest control device.

By having the battery replacement instructions coordinated, that is, instead of having each pest control device acting independently, but in an aligned manner, a more cost-efficient and also a more environmental friendly pest control operation can be achieved.

The operational parameters may be adjusted such that batteries in pest control devices within the same geographical area depleted about the same time. By doing so, the need for the operator to visit the site may be reduced. Further, from an efficiency stand point, the usage of the batteries can be improved. For instance, since having the operator being on site, i.e. the geographical area, is associated with a cost, it is common that depleted batteries as well as close to depleted batteries are being replaced, that is, batteries that could be used for additional time is also being replaced. By being able to change the operational parameters, it is further made possible to align usage of the batteries in a set of pest control devices such that fewer batteries that could be used for some additional time are being replaced. Changing the operational parameters in this context may for instance include changing at what frequency the temperature data is generated and transmitted to the gateway, changing to what extent the pest control device is acting as repeater, i.e. intermediate communication node, for other pest control devices, etc.

The method may further comprise, prior to applying the machine learning model, generating time series of temperature-adjusted voltage data by combining the voltage data and the temperature data.

The modes may at least comprise a service mode in which the pest control is subject to service, and an active mode in which the pest control device is configured to detect presence of the pest, to trap the pest and/or to kill the pest.

Since energy consumption may be higher in the service mode than in the active mode, one reason being that data exchange between the pest control device and the operator device is increased during the service mode compared to the active mode, the remaining battery life time can be determined with improved precision when taking this information into account.

The pest control device, when set in the service mode, may be in either an attached state in which a wireless communication link to the other pest control device and/or the gateway is established or in a non-attached state in which radio bursts are being transmitted for establishing such wireless communication link, wherein a non-attached state power consumption is greater than an attached state power consumption.

The pest control device may be linked to multiple other pest control devices in a mesh network, wherein the non-battery data further comprises connected device nodes data representing a current or historical number of the other pest control devices connected beneath the pest control device in the mesh network.

Having the pest control device to act as an intermediate node for a large number of pest control devices comes with the effect that a large amount of data is transferred through the pest control device. Since forwarding data in this way requires battery power, the estimation of the remaining battery life time can be improved if taking this information into account.

The machine learning model may be additionally configured to output a condition of the battery.

If having sufficient training data, the machine learning model may be configured to not only output the remaining battery life time, but also the condition of the battery. In other words, by way of example, in case the voltage data reveals a pattern associated with a faulty battery, it is made possible to detect this and report this to the operator via the operator device. Since, in some rare cases, faulty batteries may impose a risk of fire, this is beneficial also from a safety perspective.

The environment data may comprise an indoor environment state or an outdoor environment state, wherein the indoor environment state indicates that the pest control device is placed inside a building, and the outdoor environment state indicates that the pest control device is placed outside the building. As an alternative or as a complement, the temperature data may be used for identifying if the pest control device is in the indoor environment state or the outdoor environment state.

The indoor environment state or the outdoor environment state may be set by the operator during installation of the pest control device.

The non-battery data may further comprise location data. The method may further comprise retrieving external data, being dependent on the location data, such as weather data, from an external server, wherein, in the step of applying the machine learning model, the machine learning model receives the external data as further additional input.

By being able to use the location data in this manner, it is made possible to make more reliable estimations of the remaining battery life time.

According to a second aspect a predictor device comprising a processing unit configured to carry out the method according to the first aspect is provided.

According to a third aspect it is provided a system comprising the predictor device according to the second aspect, the pest control device and an operator device, wherein the predictor device is arranged to transmit a battery replacement instruction to the operator device if the prediction of the remaining battery life time of the pest control device is below a replacement threshold.

According to a fourth aspect it is provided a computer program product, loadable in a memory of at least one processing unit and comprising instructions suitable for performing the steps of the method according to the first aspect.

According to a fifth aspect it is provided a trained machine learning model configured for use in the method according to the first aspect and/or being trained using training data set comprising the reference battery data and the reference non-battery data.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 schematically illustrates a system of pest control devices.
Fig. 2A illustrates by way of example how data can be transmitted within the system illustrated in fig. 1.
Fig. 2B illustrates another example of how data can be transmitted within the system.
Fig. 3 illustrates a pest control device in the form of a rodent monitoring device.
Fig. 4 illustrates the rodent monitoring device mounted vertically on a pipe and the rodent monitoring device mounted horizontally on the pipe.
Fig. 5 illustrates discharge curves for a 2600 mAh Li-ion cell battery at different currents by way of example.
Fig. 6 illustrates discharge curves for a 8.5 Ah LTC (Lithium Thionyl Chloride) cell battery at different currents by way of example.
Fig. 7 illustrates data contained in a memory of one of the pest control devices by way of example.
Fig. 8 is a flowchart illustrating a method for estimating remaining battery life time of the pest control device.

### Detailed Description

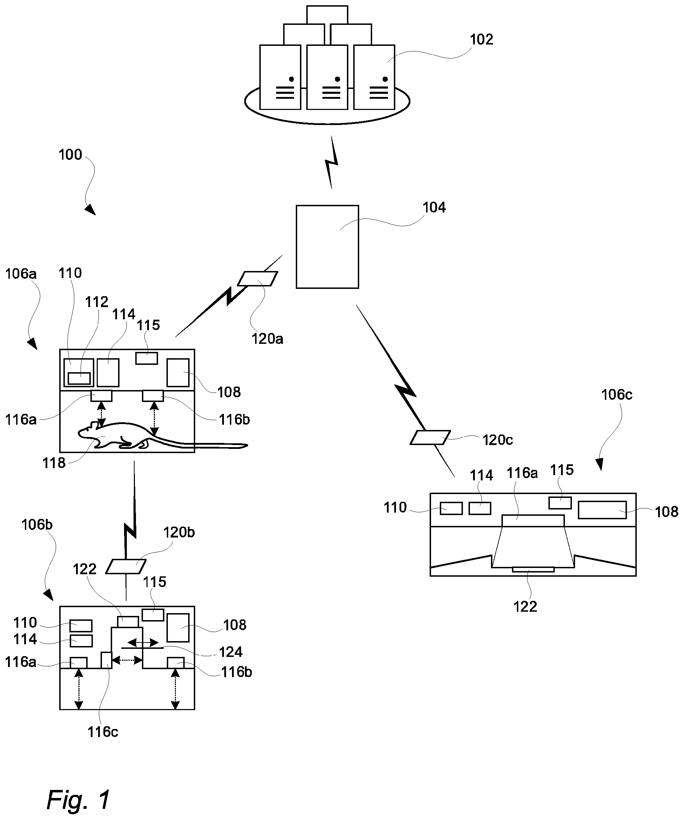

Fig. 1 generally illustrates a system 100 for pest control by way of example. As illustrated, the system 100 may comprise a server 102 communicatively connected to a gateway 104 in turn communicatively connected to a number pest control devices 106a-c. The server 102 may be placed off-site in a server park or the like, while the gateway 104 may be placed on-site together with the pest control devices 106a-c. To provide a flexible system, the pest control devices 106a-c can form a mesh network such that communication with the gateway 104 may be direct, which is the case for a first pest control device 106a and a third pest control device 106c in fig. 1, or indirect, that is, to have the pest control devices to act as repeaters, which the case for a second pest control device 106b illustrated in fig. 1. More particularly, as illustrated in fig. 1, to provide for that the status data can be transmitted from the second pest control device 106b to the gateway 104, the data can be transmitted via the first pest control device 106a. Even though using the mesh network approach comes with several advantages, other approaches, such as a star network approach, can also be used.

In this context, the wording "pest control device" should be understood to include to any device that can be used for monitoring, trapping and/or killing pests. For instance, as illustrated in fig. 1, the first control device 106a is a pest monitoring device configured to detect presence of a pest 118, exemplified by a rat or more generally a rodent. The second pest control device 106b is a combined pest monitoring and pest killing device. The third pest control device 106c is a pest trapping device, more specifically an insect pitfall trap. All three pest control devices 106a-c are provided with a battery 108, a control circuitry 110 comprising a processor 112, a memory 114, a communication unit 115 and one or more sensors 116a-c.

As explained above, the first pest control device 106a is a pest monitoring device, i.e. a device that is arranged to detect the presence of the pest, in this particular example a rodent 118. This type of device may be placed next to a wall such that a passage for the rodent is formed by the ground, the wall, an upper part of the device and a side section of the device. As illustrated, the upper part may be provided with a first and a second sensor 116a,b such that presence detection of the rodent can be made reliably.

The second pest control device 106b, being a combined pest monitoring and pest killing device, may be provided with the first and second sensor 116a-b similar to the first pest control device 1006a. In addition, this second pest control device is provided with a space extending vertically from the passage. In this space, a bait box 122 may be placed such that rodents are drawn into this space. A third sensor 116c may be used for detecting the rodent in this space, and a killing mechanism 124 in the form of a spring-loaded blade may be used for killing the rodent. An example of such device is Smart Catch^{™} marketed by Anticimex^{®}.

The third pest control device 106c is herein illustrated as the insect pitfall trap. In this type of trap, the pests, in this case insects, are drawn into the device by a bait placed in the bait box 122 in a bottom of a pitfall area of the device. In this type of pest control device, the first sensor 106a may be a camera arranged above the pitfall area such that image data depicting the insects in the pitfall area can be captured. Even though cameras may also be used in the first and second pest control device 106a,b illustrated in fig. 1, it is more common to use passive infrared (PIR) sensors in these types of pest control devices.

As illustrated, status data 120a-c may be generated by the different pest control devices 106a-c and transmitted to the gateway 104, either directly or indirectly. The status data 120a-c may take different forms. For instance, the status data 120a-c may comprise information about pest presence detections and time points associated with the different detections as well as trapping indications and killing indications associated with time points.

A challenge with having the different devices 106a-c battery-powered is to estimate the remaining life time of the batteries in a precise manner. By being able to do so, a risk of having parts of the system shut off due to emptied batteries can be kept low without the need for frequent battery replacements.

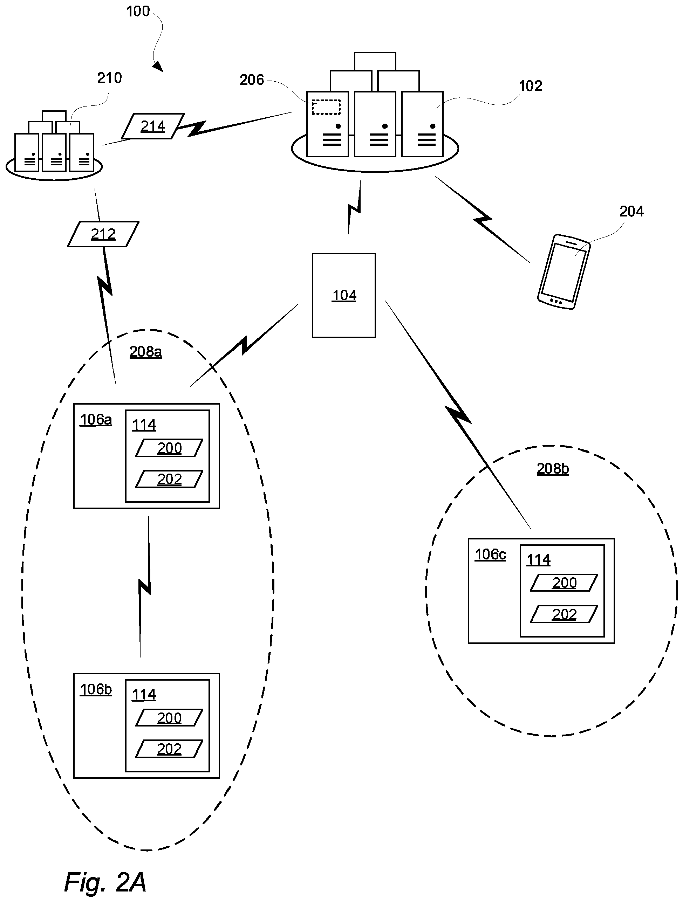

As will be explained more in detail below, it has been found that by combining both battery data 200, that is, data directly related to the battery 114 of the device, such as voltage data, with non-battery data 202, that is data not related directly to the battery, such as location data 212, the remaining battery life time can be estimated in a more precise manner. As illustrated in fig. 2A, the memory 114 of the difference pest control devices 106a-c may comprise the battery data 200 and the non-battery data 202.

As illustrated in fig. 2A, an operator device 204 may be communicatively connected to the system 100. By having this device connected, a battery replacement instruction may be provided to the operator such that battery replacements can be made swiftly. As illustrated, the operator device 204 may be a mobile phone. The system 100 and the operator device 204 may be configured such that the operator device is communicatively connected only when the operator device 204 is placed within the same geographical area as the pest control devices 106a-c and the gateway 108.

The remaining battery life time may be estimated by feeding the battery data 200 and the non-battery 202 as input to a machine learning model 206, e.g. an artificial neural network. The machine learning model 206 may be trained by means of reference battery data and reference non-battery data indicative of remaining battery life times for reference pest control devices associated with the reference battery data and the reference non-battery data. The machine learning model 206 may, as illustrated, form part of the server 102.

The non-battery data 202 is not necessarily restricted to data extracted from the pest control device itself. By way of example, the location data 212 may be provided to an external server 210, e.g. a server provided by a weather service company, such that external data 214, e.g. weather data linked to the location data 212, can be used as input to the machine learning model 206.

As illustrated in fig. 2A, different devices may be assigned to different geographical areas 208a, 208b. A benefit of having the different devices assigned to geographical areas is that battery replacements may be coordinated. For instance, in case there is a battery replacement indication issued from the first device 106a, a battery level threshold for the second device 106b, placed within the same geographical area 208a, may be lowered, i.e. lowering the conditions that need to be fulfilled for a battery replacement. In addition or alternatively, a consequence of being able to precisely monitor the remaining battery life time of batteries for devices placed within the same geographical area, e.g. the same building, is that operational parameters may be adjusted such that the batteries are emptied more or less at the same time. For instance, devices having a battery life time greater than the battery life time of most other devices in the same geographical areas may be set to act more frequently as repeater or set to collect non-battery data that can be shared with the other devices in the same geographical area.

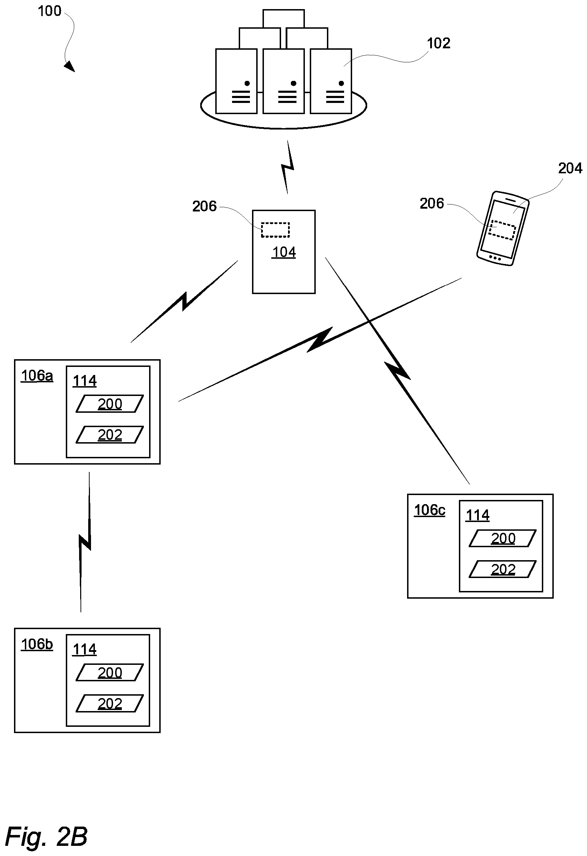

As illustrated in fig. 2A, the machine learning model 206 may form part of the server 102. Another option, as illustrated in fig. 2B, is that the machine learning model 206 is placed in the gateway 104. Still a possibility, also illustrated in fig. 2B, is that the machine learning model 206 is placed in the operator device 204. The system 100 may be set up to have the machine learning model 206 placed in only one device, or to improve redundancy, the machine learning model 206 may be placed at more than one location. Further, under some circumstances, it is also possible to have the machine learning model 206 distributed, i.e. having different parts of the model placed on different devices.

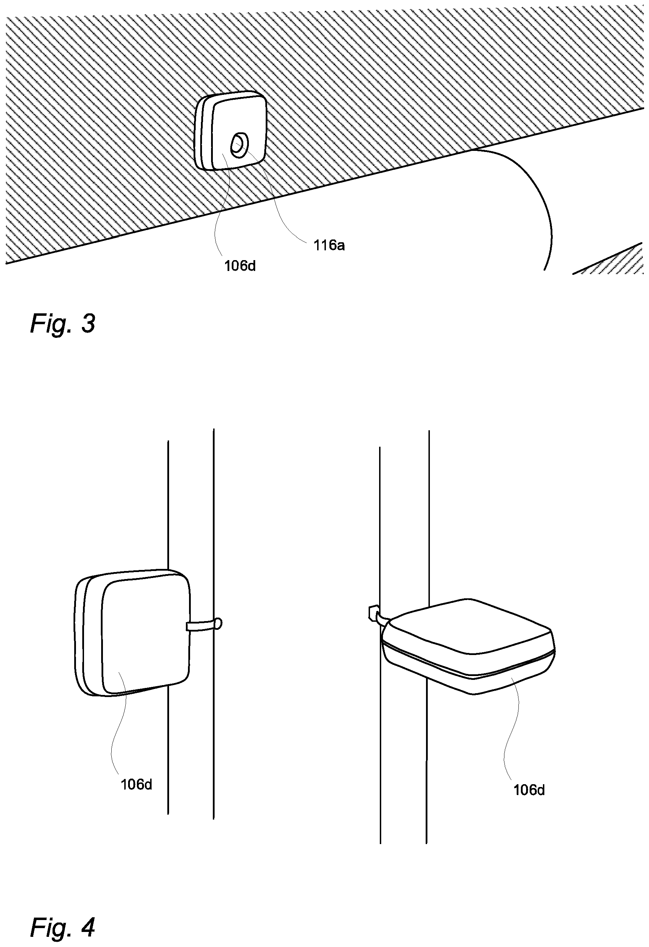

Fig. 3 illustrates by way of example a fourth pest control device 106d. As illustrated, this device is provided with the sensor 116a, more particularly a passive infrared (PIR) sensor, arranged for detecting rodents passing by. As illustrated, the device 106d, being an example of a pest monitoring device, that is, a device for detecting presence of pests, but not trapping or killing, may be placed above a pipe on which it is likely that rodents may be found. In line with the description above, the pest control device 106d illustrated in fig. 3 may be arranged to provide the status data to the gateway such that information about the pests can be monitored efficiently.

As illustrated in fig. 4, the pest control device 106d, herein exemplified by the same pest monitoring device as illustrated in fig. 3, may instead of being attached to a wall, as illustrated in fig. 3, be attached to a vertical pipe. As illustrated to the left in fig. 4, the pest control device 106d may be mounted vertically such that the sensor 116a is directed horizontally, in the illustrated example perpendicular to an extension of the pipe. Alternatively, as illustrated to the right in fig. 4, the pest control device 106d may be mounted horizontally such that the sensor 116a is directed downwards. By having this flexibility, the pest control device 106d can be adapted to meet specific needs of an environment having pest problems.

An effect of having the possibility of mounting the pest control device 106d vertically, as illustrated to the left, or horizontally, as illustrated to the right, is that the battery 108 inside the pest control device 106d is oriented differently. Put differently, the orientation of the battery 108 depends on a mounting set-up. Since battery life time may depend on the orientation of the battery 108, at least for some types of batteries, the mounting set-up may have an effect of the battery life time. To make sure that this information is made available, during installation, the mounting set-up may be registered by the operator such that this information is stored in the memory 108 of the pest control device as part of the battery data 200. The mounting set-up does not necessarily have to be directly stored in the memory 108, but may also be stored indirectly, e.g. the pest control device 106d may be provided with an identification code such that the mounting set-up may be associated with this identification code, and once this is done store the association between the identification code and the mounting set-up on a server such that this information can be retrieved at a later point of time.

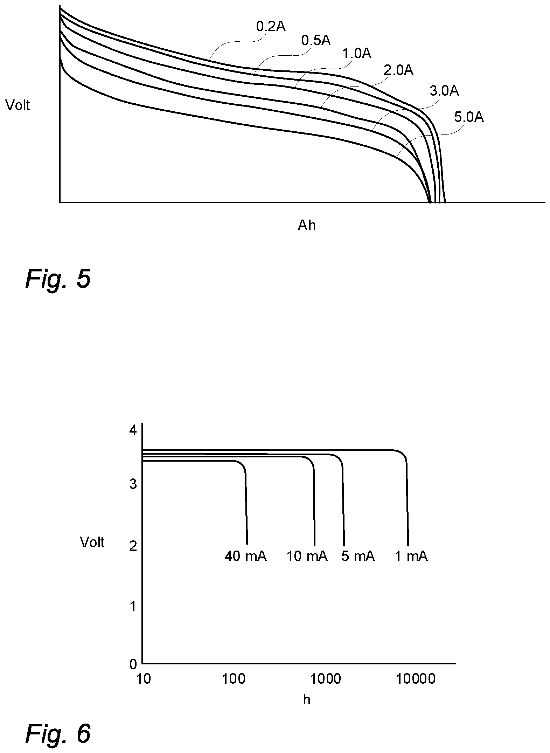

Different types of batteries have different discharge curves. By way of example, in fig. 5, it is provided a number of discharge curves for a 2600 mAh Li-ion cell battery at different currents. As can be seen, the drop in voltage is even though not linear more or less following the remaining amount of energy held in the battery. This is however not a general truth for all types of batteries. As illustrated in fig. 6, by way of example, a number of discharge curves for different currents for a Lithium Thionyl Chloride (LTC) battery is illustrated. As can be seen, the lower current, the longer battery life time. Further, it can also be concluded that, unlike the Li-ion battery discharge curves illustrated in fig. 5, there is a sudden drop in voltage resulting in using a derivative of voltage as input for determining the remaining battery life time comes with a high uncertainty, in most cases too high uncertainty. Thus, especially for LTC batteries, there is a need for methods not only relying on the voltage data for determining the remaining battery life time.

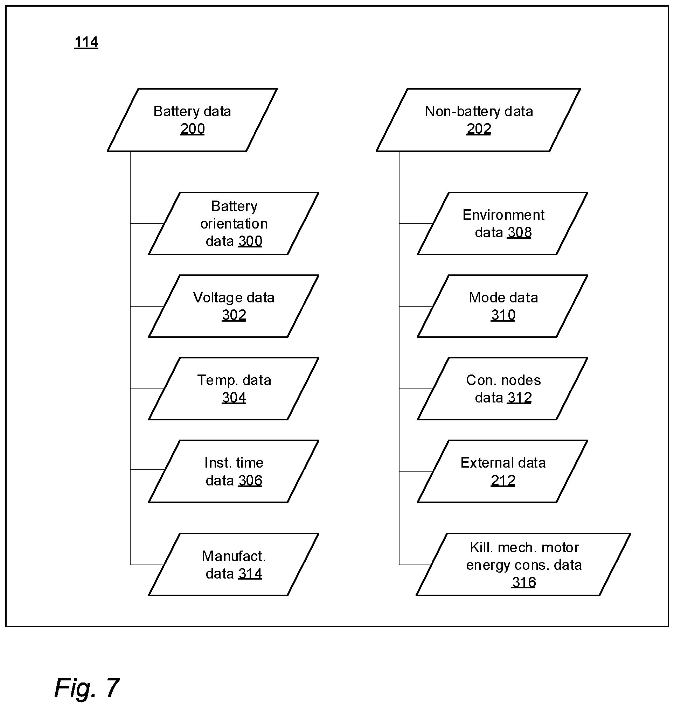

As described above, the memory 114 of the pest control device 106a-c may be arranged to hold the battery data 200 as well as the non-battery data 202. As illustrated in fig. 7, the battery data 200 may comprise battery orientation data 300, voltage data 302, temperature data 304 and/or installation time point data 306. The battery orientation data 300 may depend on the mounting set-up as described above, and this data may be retrieved by that the operator inputs this information via a user interface of the operator device. The battery orientation data 300 may be input by the operator when installing the device by selecting one of a number of different mounting set-ups, e.g. vertical mounting set-up as illustrated to the left in fig. 4 or horizontal mounting set-up as illustrated to the right in fig. 4. Still an option is that the device, after being installed, is photographed by the operator using his or her mobile phone and that the mounting set-up is retrieved by using an image analysis software for determining the mounting set-up based on image data generated by the mobile phone, or other device suitable for the purpose. In determining the mounting set-up, data generated by a gyroscope sensor of the mobile phone may be taken into account.

Still an option is to determine the battery orientation data 300 indirectly by using the voltage data in combination with the temperature data.

To identify the device, this may be provided with a code in the form of a two-dimensional pattern, such as a QR code. The code may be retrieved based on the same image data as is used for determining the mounting set-up. To facilitate determining the mounting set-up, the two-dimensional pattern of the device may be used as a spatial reference, e.g. for determining how the mobile phone is positioned in relation to the pest control device. In addition, the two-dimensional pattern may be used for identifying the pest control device, that is, the two-dimensional code may be device-specific such that an ID can be associated with the device. This ID may in turn be used for retrieving information about the device that was logged during production, e.g. type of memory.

The battery data 200 may also comprise voltage data 302. The voltage data may comprise information about voltage over the battery 114 over time. In addition, the battery data 200 may also comprise temperature data 304. Since the voltage data 302 is temperature dependent, the two data sets may be combined such that temperature-adjusted voltage data is obtained. By doing so, it is made possible to more reliably estimate the remaining battery life time .

As illustrated, the battery data 200 may comprise installation time data 306, that is, data comprising information about when in time the pest control device was installed. In case the device has been moved between different positions, that may include different mounting set-ups, this data may include time points for the different positions. In other words, the installation time point data 306 may take into account that the device may be moved between different positions during the life time of the battery and to make sure that this can be taken into account to make more reliable estimation of the remaining battery life time, the installation time point for each of these positions, or at least as many as possible, can be taken into account. In case the mounting set-up is photographed by the operator, the installation time point may be retrieved using a creation time point of the image data. As an alternative, the time point may also be manually input by the operator.

The non-battery data 202 may comprise environment data 308. This data reflects the environment in which the devices is placed. By way of example, the environment data may include indoor environment or outdoor environment. This may be reflected in that the device is set to be in an indoor environment state or an outdoor environment state. These states may be set by the operator or they may be set based on the image data, optionally in combination with the temperature data 304. The environment data 308 may also include or be determined based on location data of the device. The location data may be determined indirectly by making use of the location data generated by the mobile phone when the image data was created.

The non-battery data 202 may also include mode data 310. Since different modes may require different energy, the estimation of remaining battery life time can be made more reliable if keeping track of the mode data. The mode data may include service mode or active mode, that is, the data may comprise information about during which time periods the device is set in the active mode, i.e. set to monitor, trap or kill pests, or in the service mode, which may include re-configuring the mesh network, transmitting the status data to the gateway or other operations not related to monitoring, trapping or killing the pests. The service mode may in turn comprise an attached state in which a wireless communication link to another pest control device and/or the gateway is established or a non-attached state in which radio bursts are being transmitted for establishing such wireless communication link, wherein the non-attached state power consumption is greater than the attached state power. consumption.

Further, the pest control device may be linked to multiple other pest control devices in the mesh network as described above. Since the number of connections to other pest control devices may affect the battery life time, the non-battery data may further comprise connected device nodes data 312 representing a current or historical number of the other pest control devices connected beneath the pest control device in the mesh network. By keeping track on this information and also combining this with other types of data of the battery data and/or the non-battery data, a more reliable estimation of the battery life time can be achieved.

In addition, as illustrated in fig. 2A, the external data 212, e.g. weather conditions retrieved from a weather service provider, may also form part of the non-battery data 202.

As illustrated, the battery data 200 may also comprise manufacturing data 314. This data may comprise information about the manufacturing date, and also manufacturing time, thereby making it possible to take into account any production deviations that may have occurred during a certain time period. For instance, in case it can be found, by using the machine learning model, that batteries produced at a certain date in a certain factory is performing differently compared to an average performance of batteries produced in this factory, this may be taken into account when estimating the remaining battery life time. In addition to manufacturing date, the manufacturing data 314 may also comprise batch identification data, i.e. data making it possible to link the battery to a batch of batteries produced at the same time under the same conditions. By having this information, it is possible to use learnings from other batteries of the same batch for determining the remaining battery life time.

Further, the non-battery data 202 may also comprise killing mechanism motor energy consumption data 316. This data may comprise information about how much energy a motor forming part of the killing mechanism is consuming over time and for different states. For instance, the motor may be a servomotor that is loading the killing mechanism, e.g. spring-loading a blade. The energy needed for such loading operation may be device-specific, e.g. due to that the blade may run more or less freely in different traps. By being able to take into account the killing mechanism motor energy consumption data 316, a more reliable prediction of the remaining battery life time can be made.

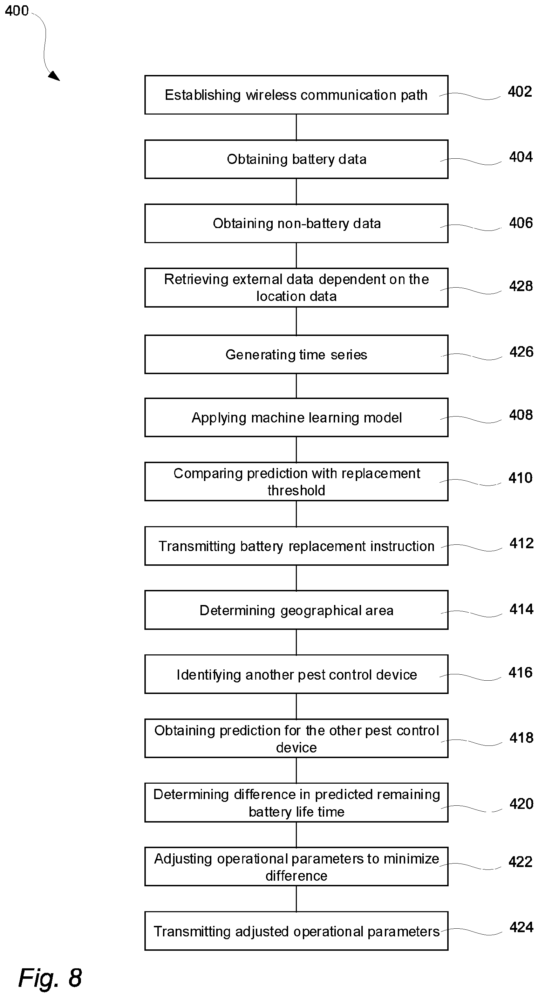

Fig. 8 is a flowchart illustrating a method 400 for estimating remaining battery life time of the pest control device 106a-c. The method may comprise establishing 402 a data communication path to the communication unit 115 of the pest control device 106a-c, obtaining 404 the battery data 200 from the memory 114 of the pest control device 106a-c via the data communication path, obtaining 406 the non-battery data 202 from the memory 114 of the pest control device 106a-c via the data communication path, applying 408 the machine learning model 206, wherein the machine learning model receives as input the battery data 200 and as additional input the non-battery data 202 and outputs a prediction of the remaining battery life time of the pest control device 106a-c, wherein the machine learning model has been trained by means of reference battery data and reference non-battery data indicative of remaining battery life times for reference pest control devices associated with the reference battery data and the reference non-battery data.

The method may further comprise comparing 410 the prediction of the remaining battery life time with a replacement threshold, and in case the prediction is below the replacement threshold, transmitting 412 a battery replacement instruction to an operator device 204.

Still further, the method may comprise determining 414 the geographical area 208a in which the pest control device 106a is placed, identifying 416 another pest control device 106b placed within the geographical area 208a, obtaining 418 the prediction of the remaining battery life time of the other pest control device 106b, determining 420 a difference in predicted remaining battery life time by using the prediction of the remaining battery life time of the other pest control device and the prediction of the remaining battery life time, in case the difference is above a threshold, adjusting 422 operational parameters, such as sleep period time between activated periods, such that the difference is minimized, and transmitting 424 the operational parameters adjusted to the memory 114 of the pest control device 106a. The sleep period may be defined as a period between the active periods, wherein the sensor is activated during the active periods and inactive during the sleep period.

The method may further comprise, prior to applying the machine learning model 206, generating 426 time series of temperature-adjusted voltage data by combining the voltage data 302 and the temperature data 304.

In case the non-battery data 202 comprises the location data 212, the method may further comprise retrieving 428 the external data 214, being dependent on the location data 212, such as weather data, from the external server 210, wherein, in the step of applying the machine learning model 206, the machine learning model 206 receives the external data 214 as further additional input.

From the description above follows that, although various embodiments of the invention have been described and shown, the invention is not restricted thereto, but may also be embodied in other ways within the scope of the subject-matter defined in the following claims.

## Claims

1. A computer-implemented method (400) for estimating remaining battery life time of a pest control device (106a-c), wherein the pest control device (106a-c) comprises a battery (108), a control circuitry (110) comprising a processor (112), a memory (114), a communication unit (115) and a sensor (116a-c) configured to detect a pest (118), wherein the pest control device (106a-c) is arranged to obtain sensor data using the sensor (116a-c), process the sensor data into status data (120a-c) using the control circuitry (110), and provide the status data (120a-c) using the communication unit (115) to a gateway (104), wherein the status data (120a-c) comprises a presence detection of the pest, a trapping indication of the pest and/or a killing indication of the pest, wherein the memory (114) comprises battery data (200) comprising one or more of the following: battery orientation data (300) representing information about orientation of the battery (108), temperature data (304) representing a current temperature and/or historical temperature of the battery, voltage data (302) representing a current and/or historical voltage over the battery, installation time data (306) representing time of installation of the battery, and manufacturing data (314) representing manufacturing date, and/or batch identification data, and non-battery data (202) comprising one or more of the following environment data (308) representing information about an environment in which the pest control device is placed, mode data (310) comprising current mode and/or historical modes of the pest control device, and location data (212) representing a geographical position of the pest control device, said method comprising
establishing (402) a data communication path to the communication unit (115) of the pest control device (106a-c),
obtaining (404) the battery data (200) from the memory (114) of the pest control device (106a-c) via the data communication path,
obtaining (406) the non-battery data (202) from the memory (114) of the pest control device (106a-c) via the data communication path,
applying (408) a machine learning model (206), wherein the machine learning model receives as input the battery data (200) and as additional input the non-battery data (202) and outputs a prediction of the remaining battery life time of the pest control device (106a-c), wherein the machine learning model has been trained by means of reference battery data and reference non-battery data indicative of remaining battery life times for reference pest control devices associated with the reference battery data and the reference non-battery data.

2. The method according to claim 1, further comprising:
comparing (410) the prediction of the remaining battery life time with a replacement threshold,
in case the prediction is below the replacement threshold, transmitting (412) a battery replacement instruction to an operator device (204).

3. The method according to any one of the preceding claims, further comprising:
determining (414) a geographical area (208a) in which the pest control device (106a) is placed,
identifying (416) another pest control device (106b) placed within the geographical area (208a),
obtaining (418) the prediction of the remaining battery life time of the other pest control device (106b),
determining (420) a difference in predicted remaining battery life time by using the prediction of the remaining battery life time of the other pest control device and the prediction of the remaining battery life time,
in case the difference is above a threshold, adjusting (422) operational parameters, such as sleep period time between activated periods, such that the difference is minimized, and
transmitting (424) the operational parameters adjusted to the memory (114) of the pest control device (106a).

4. The method according to any one of the preceding claims, further comprising
prior to applying the machine learning model (206), generating (426) time series of temperature-adjusted voltage data by combining the voltage data (302) and the temperature data (304).

5. The method according to any one of the preceding claims, wherein the modes at least comprises a service mode in which the pest control is subject to service, and an active mode in which the pest control device is configured to detect presence of the pest, to trap the pest and/or to kill the pest.

6. The method according to claim 5, wherein the pest control device, when set in the service mode, is in either an attached state in which a wireless communication link to the other pest control device and/or the gateway is established or in a non-attached state in which radio bursts are being transmitted for establishing such wireless communication link, wherein a non-attached state power consumption is greater than an attached state power consumption.

7. The method according to any one of the preceding claims, wherein the pest control device is linked to multiple other pest control devices in a mesh network, wherein the non-battery data further comprises connected device nodes data representing a current or historical number of the other pest control devices connected beneath the pest control device in the mesh network.

8. The method according to any one of the preceding claims, wherein the machine learning model is additionally configured to output a condition of the battery.

9. The method according to any one of the preceding claims, wherein the environment data (308) comprises an indoor environment state or an outdoor environment state, wherein the indoor environment state indicates that the pest control device is placed inside a building, and the outdoor environment state indicates that the pest control device is placed outside the building.

10. The method according to claim 9, wherein the indoor environment state or the outdoor environment state is set by an operator during installation of the pest control device.

11. The method according to any one of the preceding claims, wherein the non-battery data (202) further comprises location data (212), said method further comprising
retrieving (428) external data (214), being dependent on the location data (212), such as weather data, from an external server (210),
wherein, in the step of applying the machine learning model (206), the machine learning model (206) receives the external data (214) as further additional input.

12. A predictor device (102, 204) comprising a processing unit configured to carry out the method according to any one of the preceding claims.

13. A system (100) comprising the predictor device (102) according to claim 12, the pest control device (106a-c) and an operator device (204), wherein the predictor device (102) is arranged to transmit a battery replacement instruction to the operator device (204) if the prediction of the remaining battery life time of the pest control device is below a replacement threshold.

14. A computer program product, loadable in a memory of at least one processing unit and comprising instructions suitable for performing the steps of the method according to any of the claims 1 to 11.

15. A trained machine learning model (206) configured for use in the method according to any one of the claims 1 to 11 and/or being trained using training data set comprising the reference battery data and the reference non-battery data.

## Amended claims

### Amended claims in accordance with Rule 137(2) EPC.

1. A computer-implemented method (400) for estimating remaining battery life time of a pest control device (106a-c), wherein the pest control device (106a-c) comprises a battery (108), a control circuitry (110) comprising a processor (112), a memory (114), a communication unit (115) and a sensor (116a-c) configured to detect a pest (118), wherein the pest control device (106a-c) is arranged to obtain sensor data using the sensor (116a-c), process the sensor data into status data (120a-c) using the control circuitry (110), and provide the status data (120a-c) using the communication unit (115) to a gateway (104), wherein the status data (120a-c) comprises a presence detection of the pest, a trapping indication of the pest and/or a killing indication of the pest, wherein the memory (114) comprises battery data (200) comprising one or more of the following: battery orientation data (300) representing information about orientation of the battery (108), temperature data (304) representing a current temperature and/or historical temperature of the battery, voltage data (302) representing a current and/or historical voltage over the battery, installation time data (306) representing time of installation of the battery, and manufacturing data (314) representing manufacturing date, and/or batch identification data, and non-battery data (202) comprising one or more of the following environment data (308) representing information about an environment in which the pest control device is placed, mode data (310) comprising current mode and/or historical modes of the pest control device, and location data (212) representing a geographical position of the pest control device, said method comprising
establishing (402) a data communication path to the communication unit (115) of the pest control device (106a-c),
obtaining (404) the battery data (200) from the memory (114) of the pest control device (106a-c) via the data communication path,
obtaining (406) the non-battery data (202) from the memory (114) of the pest control device (106a-c) via the data communication path,
applying (408) a machine learning model (206), wherein the machine learning model receives as input the battery data (200) and as additional input the non-battery data (202) and outputs a prediction of the remaining battery life time of the pest control device (106a-c), wherein the machine learning model has been trained by means of reference battery data and reference non-battery data indicative of remaining battery life times for reference pest control devices associated with the reference battery data and the reference non-battery data,
wherein the pest control device is linked to multiple other pest control devices in a mesh network,
wherein the non-battery data further comprises connected device nodes data representing a current or historical number of the other pest control devices connected beneath the pest control device in the mesh network.

2. The method according to claim 1, further comprising:
comparing (410) the prediction of the remaining battery life time with a replacement threshold,
in case the prediction is below the replacement threshold, transmitting (412) a battery replacement instruction to an operator device (204).

3. The method according to any one of the preceding claims, further comprising:
determining (414) a geographical area (208a) in which the pest control device (106a) is placed,
identifying (416) another pest control device (106b) placed within the geographical area (208a),
obtaining (418) the prediction of the remaining battery life time of the other pest control device (106b),
determining (420) a difference in predicted remaining battery life time by using the prediction of the remaining battery life time of the other pest control device and the prediction of the remaining battery life time,
in case the difference is above a threshold, adjusting (422) operational parameters, such as sleep period time between activated periods, such that the difference is minimized, and
transmitting (424) the operational parameters adjusted to the memory (114) of the pest control device (106a).

4. The method according to any one of the preceding claims, further comprising
prior to applying the machine learning model (206), generating (426) time series of temperature-adjusted voltage data by combining the voltage data (302) and the temperature data (304).

5. The method according to any one of the preceding claims, wherein the modes at least comprises a service mode in which the pest control is subject to service, and an active mode in which the pest control device is configured to detect presence of the pest, to trap the pest and/or to kill the pest.

6. The method according to claim 5, wherein the pest control device, when set in the service mode, is in either an attached state in which a wireless communication link to the other pest control device and/or the gateway is established or in a non-attached state in which radio bursts are being transmitted for establishing such wireless communication link, wherein a non-attached state power consumption is greater than an attached state power consumption.

7. The method according to any one of the preceding claims, wherein the machine learning model is additionally configured to output a condition of the battery.

8. The method according to any one of the preceding claims, wherein the environment data (308) comprises an indoor environment state or an outdoor environment state, wherein the indoor environment state indicates that the pest control device is placed inside a building, and the outdoor environment state indicates that the pest control device is placed outside the building.

9. The method according to claim 8, wherein the indoor environment state or the outdoor environment state is set by an operator during installation of the pest control device.

10. The method according to any one of the preceding claims, wherein the non-battery data (202) further comprises location data (212), said method further comprising
retrieving (428) external data (214), being dependent on the location data (212), such as weather data, from an external server (210),
wherein, in the step of applying the machine learning model (206), the machine learning model (206) receives the external data (214) as further additional input.

11. A predictor device (102, 204) comprising a processing unit configured to carry out the method according to any one of the preceding claims.

12. A system (100) comprising the predictor device (102) according to claim 11, the pest control device (106a-c) and an operator device (204), wherein the predictor device (102) is arranged to transmit a battery replacement instruction to the operator device (204) if the prediction of the remaining battery life time of the pest control device is below a replacement threshold.

13. A computer program product, loadable in a memory of at least one processing unit and comprising instructions suitable for performing the steps of the method according to any of the claims 1 to 10.

14. A trained machine learning model (206) configured for use in the method according to any one of the claims 1 to 10 and/or being trained using training data set comprising the reference battery data and the reference non-battery data.
